(19) Europäisches Patentamt
European Patent Office
Office européen des brevets

(11) **EP 3 979 485 A1**

(12) **EUROPEAN PATENT APPLICATION**
published in accordance with Art. 153(4) EPC

(43) Date of publication:
**06.04.2022 Bulletin 2022/14**

(21) Application number: **20818334.3**

(22) Date of filing: **28.05.2020**

(51) International Patent Classification (IPC):
**H02M 7/48** [(2007.01)]

(52) Cooperative Patent Classification (CPC):
**H02M 7/48**

(86) International application number:
**PCT/JP2020/021041**

(87) International publication number:
**WO 2020/246355 (10.12.2020 Gazette 2020/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.06.2019  JP 2019104361**

(71) Applicant: **Sanden Advanced Technology
Corporation
Isesaki-shi, Gunma 372-8502 (JP)**

(72) Inventor: **KASHIHARA Tatsuki
Isesaki-shi Gunma 372-8502 (JP)**

(74) Representative: **Prüfer & Partner mbB
Patentanwälte · Rechtsanwälte
Sohnckestraße 12
81479 München (DE)**

(54) **POWER CONVERSION DEVICE**

(57)    A power conversion device is provided which can detect a phase current without generating noise and without hindrance, even in situations in which a motor is rotated at a low speed so that a DC current flowing through an inverter circuit is difficult to detect. A duty correcting unit 39 which corrects the duty of a PWM signal, moves and adds a part of an ON period of each of switching elements 18B and 18C of an inverter circuit 28 in the other carrier cycle to an ON period of each of the switching elements 18B and 18C thereof in a specific carrier cycle to correct the ON period of each of the switching elements in the specific carrier cycle to be greater than or equal to a minimum time Y required for detecting the current by a current detector 30.

FIG. 1

**Description**

Technical Field

The present invention relates to a power conversion device which supplies power to a motor to drive the same.

Background Art

Conventionally, a power conversion device for driving a motor performs PWM (Pulse Width Modulation) control of switching elements of UVW respective phases of a three-phase inverter circuit, but one current detector (shunt resistor or Hall element) detecting a DC current between a DC power supply and the inverter circuit is provided to detect a phase current that becomes information to estimate the position of a rotor (rotating member) with a permanent magnet built therein, and the phase currents of two phases of UVW are detected from the DC current detected by the current detector and the switching timing of the switching element, finally resulting in obtaining the phase current of each phase (refer to, for example, Patent Document 1).

Further, in recent years, a power conversion device (inverter device) in which a method called discontinuous modulation is applied to a PWM control unit has also been proposed for the purpose of reducing loss and heat generation of switching elements. This power conversion device of discontinuous modulation method fixes an ON/OFF state of any one of UVW respective phases and controls only other two phases while modulating the ON/OFF state, thereby performing PWM control while reducing the number of switching times of the switching element as compared with a sinusoidal modulation method and decreasing a switching loss and a heat generation amount (refer to, for example, Patent Document 2).

Citation List

Patent Documents

Patent Document 1: Japanese Patent No. 4788416
Patent Document 2: Japanese Patent Application Laid-Open No. Hei-8(1996)-340691

Summary of the Invention

Problems to be solved by the Invention

Here, in Patent Document 1 described above, when the switching element on the upper arm side of the W phase is turned ON for substantially the entire period within a carrier cycle, and the switching element on the upper arm side of the V phase is turned OFF, the period during which the switching element on the upper arm side of the U phase is turned ON becomes shorter and is made shorter than the minimum time required for detecting the current by the current detector. When the phase currents for two phases cannot be detected, there has been performed a correction in which the ON periods of the switching element on the upper arm side of the U phase in the two carrier cycles are collected in one carrier cycle, and no energization is done for the remaining carrier cycle (for example, FIG. 10 (b) of Patent Document 1).

However, when the above correction is performed, the carrier frequency is halved because the U-phase switching element is switched at every other carrier cycle. On the other hand, a problem arises in that since the carrier frequency is usually set to a value out of an audible region, noise is generated at the half carrier frequency.

The present invention has been made to solve such conventional technical problems. The present invention provides a power conversion device capable of detecting a phase current without generating noise and without any trouble even in situations in which a motor is rotated at a low speed and thereby it becomes difficult to detect a DC current flowing through an inverter circuit.

Means for solving the Problems

A power conversion device of the present invention includes an inverter circuit which drives a motor, a current detector which detects a DC current flowing through the inverter circuit, a command value calculating unit which calculates a voltage command value to be applied to the motor, based on the current value detected by the current detector, a PWM signal generating unit which generates a PWM signal to PWM-control the inverter circuit, based on the voltage command value calculated by the command value calculating unit, and a duty correcting unit which corrects a duty of the PWM signal generated by the PWM signal generating unit. The power conversion device is characterized in that the duty correcting unit moves and adds a part of an ON period of one of switching elements of the inverter circuit in the other carrier cycle to an ON period of the switching element in a specific carrier cycle or moves and adds a part of an OFF period of the switching element in the other carrier cycle to an OFF period of the switching element in the specific carrier cycle to correct the ON period or OFF period of the switching element in the specific carrier cycle to be greater than or equal to a minimum time required for detecting the current by the current detector.

The power conversion device of the invention of claim 2 is characterized in that in the above invention, the duty correcting unit causes the sums of duties in the specific carrier cycle and the other carrier cycle to match with each other before and after the correction.

The power conversion device of the invention of claim 3 is characterized in that in the above respective inventions, the duty correcting unit corrects the corrected ON period or OFF period of the switching element in the other carrier cycle to be an outputtable minimum value.

The power conversion device of the invention of claim 4 is characterized in that in the above respective inventions, the duty correcting unit provides the corrected ON period or OFF period of the switching element in the first half of the specific carrier cycle.

The power conversion device of the invention of claim 5 is characterized in that in the above invention, the duty correcting unit provides the corrected ON period or OFF period of the switching element in the latter half of the other carrier cycle.

The power conversion device of the invention of claim 6 is characterized in that in the above respective inventions, when a voltage utilization rate of the motor which is a square average of normalized voltage command values drops to a predetermined voltage utilization rate or less, the duty correcting unit corrects the ON period or OFF period of the switching element in the specific carrier cycle and the other carrier cycle.

The power conversion device of the invention of claim 7 is characterized in that in the above respective inventions, the command value calculating unit includes a phase voltage command calculating unit which calculates sinusoidal modulation voltage command values to be applied to the motor, and a line modulation calculating unit which, based on the sinusoidal modulation voltage command values, calculates discontinuous modulation voltage command values for fixing an ON/OFF state of the switching element of a predetermined one phase in the inverter circuit and modulating ON/OFF states of the switching elements of other two phases, and in that the PWM signal generating unit generates PWM signals to PWM-control the inverter circuit, based on the discontinuous modulation voltage command values calculated by the line modulation calculating unit.

The power conversion device of the invention of claim 8 is characterized in that in the above invention, when an OFF state of the switching element on the upper arm side of the one phase in the inverter circuit is fixed, and an ON period of each of the switching elements on the upper arm side of other two phases is shorter than the minimum time within one carrier cycle, or when an ON state of the switching element on the upper arm side of the one phase is fixed, and an OFF period of each of the switching elements on the upper arm side of other two phases is shorter than the minimum time within one carrier cycle, the duty correcting unit corrects the ON period or OFF period of the switching element in the specific carrier cycle and the other carrier cycle.

Advantageous Effect of the Invention

According to the present invention, in a power conversion device including an inverter circuit which drives a motor, a current detector which detects a DC current flowing through the inverter circuit, a command value calculating unit which calculates a voltage command value to be applied to the motor, based on the current value detected by the current detector, a PWM signal generating unit which generates a PWM signal to PWM-control the inverter circuit, based on the voltage command value calculated by the command value calculating unit, and a duty correcting unit which corrects a duty of the PWM signal generated by the PWM signal generating unit, the duty correcting unit moves and adds a part of an ON period of one of switching elements of the inverter circuit in the other carrier cycle to an ON period of the switching element in a specific carrier cycle or moves and adds a part of an OFF period of the switching element in the other carrier cycle to an OFF period of the switching element in the specific carrier cycle to correct the ON period or OFF period of the switching element in the specific carrier cycle to be greater than or equal to a minimum time required for detecting the current by the current detector. Therefore, for example, in the power conversion device of the discontinuous modulation method as in the invention of claim 7, even when as in the invention of claim 6, a voltage utilization rate of the motor becomes low and thereby as in the invention of claim 8, for example, the OFF state of the switching element on the upper arm side of one phase in the inverter circuit is fixed, and the ON periods of the switching elements on the upper arm side of the other two phases become shorter than the minimum time within one carrier cycle, or even when the ON state of the switching element on the upper arm side of one phase is fixed, and the OFF periods of the switching elements on the upper arm side of other two phases become shorter than the minimum time within one carrier cycle, it is possible to secure the ON period or OFF period greater than or equal to the minimum time for detecting the current by the current detector in the specific carrier cycle and detect the phase current.

In particular, since the duty correcting unit adds the part of the ON period or OFF period of the switching element in the other carrier cycle to the ON period or OFF period of the switching element in the specific carrier cycle, the generation of noise due to a decrease in the carrier frequency can also be prevented.

Also, according to the invention of claim 2, since the duty correcting unit matches the sums of the duties in the specific carrier cycle and the other carrier cycle with each other before and after the correction in addition to the above invention, it is possible to achieve high-quality motor control without causing deterioration of the controllability of the motor as well.

In this case, as in the invention of claim 3, if the duty correcting unit corrects the corrected ON period or OFF period of the switching element in the other carrier cycle to be the minimum value that can be output, it is possible to secure the ON period or OFF period of the minimum time or more for current detection by the current detector in the specific carrier cycle without any problem even if the motor is rotated at a low speed.

Further, if the duty correcting unit provides the corrected ON period or OFF period of the switching element in the first half of the specific carrier cycle as in the invention of claim 4, and provides the corrected ON period or OFF period of the switching element in the latter half of the other carrier cycle as in the invention of claim 5, the phase of the ON period or OFF period does not overlap with other phases, and the phase current can be easily detected in the specific carrier cycle.

Brief Description of the Drawings

FIG. 1 is an electric circuit diagram of a power conversion device according to one embodiment of the present invention.

FIG. 2 is a longitudinal cross-sectional side view of an electric compressor of one embodiment provided with the power conversion device of FIG. 1.

FIG. 3 is a diagram showing sinusoidal modulation voltage command values and carrier triangular waves output by a phase voltage command calculating unit constituting a command value calculating unit of a control section of FIG. 1, and a PWM waveform and a UV line voltage when performing sinusoidal modulation control.

FIG. 4 is a diagram showing discontinuous modulation voltage command values and carrier triangular waves output by a line modulation calculating unit constituting a command value calculating unit of the control section of FIG. 1, and a PWM waveform and a UV line voltage output by a PWM signal generating unit.

FIG. 5 is a diagram showing discontinuous modulation voltage command values and carrier triangular waves output by the line modulation calculating unit constituting the command value calculating unit of the control section of FIG. 1, and a PWM waveform and a line voltage output by the PWM signal generating unit.

FIG. 6 is an enlarged diagram of the vicinity of a frame X in FIG. 5.

FIG. 7 is a diagram showing discontinuous modulation voltage command values and carrier triangular waves output by the line modulation calculating unit constituting the command value calculating unit of the control section of FIG, 1, and a PWM waveform and a line voltage output and corrected by a duty correcting unit.

FIG. 8 is an enlarged diagram of the vicinity of a frame X of FIG. 7.

Mode for carrying out the Invention

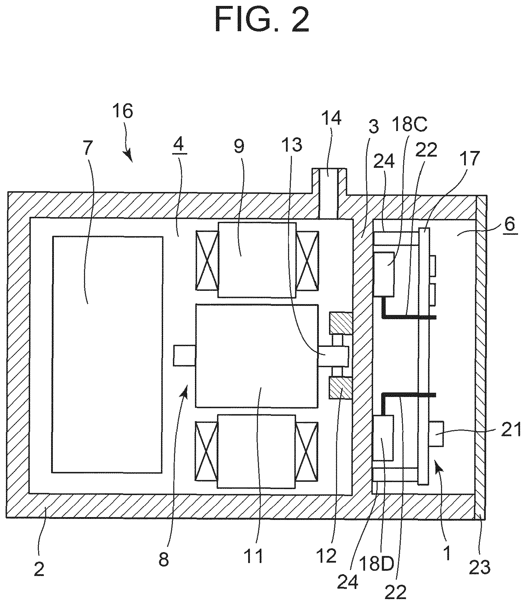

Hereinafter, embodiments of the present invention will be described in detail based on the drawings. First, an electric compressor (a so-called inverter-integrated electric compressor) 16 according to an embodiment integrally provided with a power conversion device 1 of the present invention will be described with reference to FIG. 2. Incidentally, the electric compressor 16 of the embodiment constitutes a part of a refrigerant circuit of a vehicle air conditioning device mounted on a vehicle such as a hybrid car, an electric vehicle or the like and is powered and driven by a DC power supply (battery) 29 mounted on the vehicle.

(1) Configuration of Electric Compressor 16

In FIG. 2, the inside of a metal-made housing 2 of the electric compressor 16 is partitioned into a compression mechanism housing section 4 and an inverter housing section 6 by a partition wall 3 intersecting an axial direction of the housing 2. For example, a scroll-type compression mechanism 7 and a motor 8 which drives this compression mechanism 7 are accommodated in the compression mechanism housing section 4. In this case, the motor 8 is an IPMSM (Interior Permanent Magnet Synchronous Motor) composed of a stator 9 fixed to the housing 2 and a permanent magnet built-in rotor 11 rotating inside the stator 9.

A bearing portion 12 is formed at the central portion of the partition wall 3 on the compression mechanism housing section 4 side. One end of a drive shaft 13 of the rotor 11 is supported by the bearing portion 12, and the other end of the drive shaft 13 is linked to the compression mechanism 7. A suction port 14 is formed in the vicinity of the partition wall 3 at a position corresponding to the compression mechanism housing section 4 of the housing 2. When the rotor 11 (drive shaft 13) of the motor 8 is rotated to drive the compression mechanism 7, a refrigerant which is a working fluid, flows from the suction port 14 into the compression mechanism housing section 4 of the housing 2 and is sucked into and compressed by the compression mechanism 7.

Then, the refrigerant compressed by the compression mechanism 7 and brought to a high temperature and high pressure is configured to be discharged from an unillustrated discharge port to the refrigerant circuit outside the housing 2. Further, since the low temperature refrigerant flowing from the suction port 14 passes near the partition wall 3 and passes around the motor 8, and is sucked by the compression mechanism 7, the partition wall 3 is also cooled.

And then, the power conversion device 1 of the present invention which drives and controls the motor 8 is housed in the inverter housing section 6 partitioned from the compression mechanism housing section 4 by the partition wall 3. In this case, the power conversion device 1 is configured to supply power to the motor 8 through a sealing terminal and a lead wire penetrating the partition wall 3.

(2) Structure of Power Conversion Device 1

In the case of the embodiment, the power conversion device 1 is constituted of a substrate 17, six switching elements 18A to 18F wired on one surface side of the substrate 17, a control section 21 wired on the other surface side of the substrate 17, and an HV connector, an LV connector, etc. which are not shown in the drawing. In the embodiment, each of the switching elements 18A to 18F is constituted of an insulated gate bipolar transistor (IGBT) or the like in which a MOS structure is incorporated in a gate portion.

In this case, in the embodiment, the switching element 18A on the upper arm side of a U-phase inverter 19U of a three-phase inverter circuit (three-phase inverter circuit) 28 to be described later and the switching element 18D on the lower arm side thereof, the switching element 18B on the upper arm side of a V-phase inverter 19V and the switching element 18E on the lower arm side thereof, and the switching element 18C on the upper arm side of a W-phase inverter 19W thereof and the switching element 18F on the lower arm side thereof are in the form of being arranged two by two respectively. The thus-arranged respective pairs of switching elements 18A and 18D, switching elements 18B and 18E, and switching elements 18C and 18F are radially disposed around the center of the substrate 17.

Further, terminal portions 22 of the respective switching elements 18A to 18F are connected to the substrate 17 in a state in which they are on the center side of the substrate 17. Then, in a state in which one surface side of the respective switching elements 18A to 18F being present is on the partition wall 3 side, the power conversion device 1 assembled in this manner is accommodated in the inverter housing section 6, attached to the partition wall 3 and closed with a cover 23. In this case, the substrate 17 is fixed to the partition wall 3 via boss portions 24 which stand up from the partition wall 3.

Thus, in the state in which the power conversion device 1 is attached to the partition wall 3, the respective switching elements 18A to 18F are in close contact with the partition wall 3 directly or through a predetermined insulating heat conductive material and have a heat exchange relation with the partition wall 3 of the housing 2. Then, since the partition wall 3 is cooled by the refrigerant sucked into the compression mechanism housing section 4 as described above, the respective switching elements 18A to 18F are placed in heat exchange relation with the sucked refrigerant via the partition wall 3 and cooled by the refrigerant sucked into the compression mechanism housing section 4 through the thickness of the partition wall 3. The respective switching elements 18A to 18F themselves dissipate heat to the refrigerant through the partition wall 3.

(3) Configuration of Electric Circuit of Power Conversion Device 1

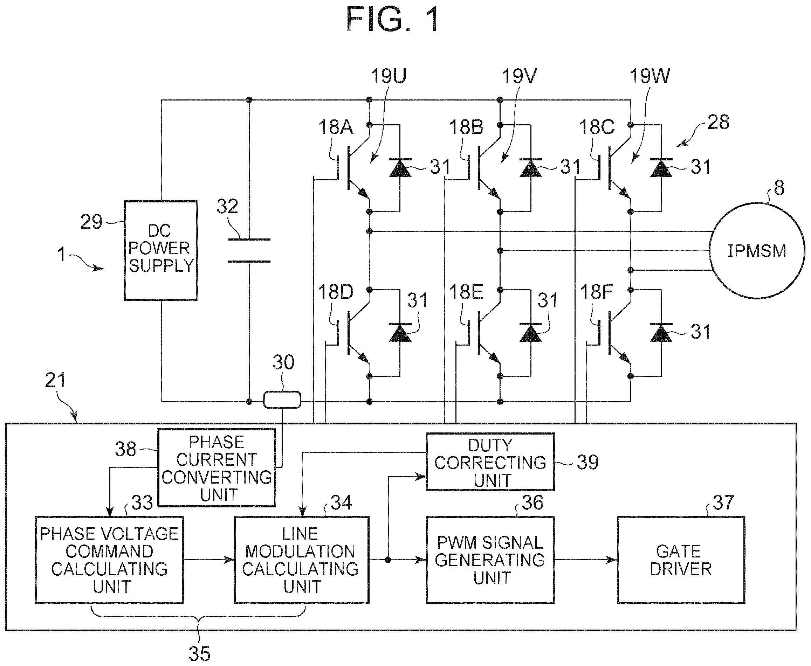

Next, in FIG. 1, the power conversion device 1 according to the embodiment of the present invention includes the above-described three-phase inverter circuit (three-phase inverter circuit) 28 and control section 21. The inverter circuit 28 is a circuit which converts a DC voltage of the DC power supply (battery) 29 into a three-phase AC voltage and applies it to an armature coil of the stator 9 of the motor 8. This inverter circuit 28 has the U-phase inverter 19U, the V-phase inverter 19V, and the W-phase inverter 19W described above. The phase inverters 19U to 19W respectively have the switching elements 18A to 18C on the upper arm side described above, and the switching elements 18D to 18F on the lower arm side individually. Further, flywheel diodes 31 are connected in antiparallel to the switching elements 18A to 18F respectively.

Then, the upper end sides of the switching elements 18A to 18C on the upper arm side of the inverter circuit 28 are connected to the positive electrode sides of the DC power supply 29 and a smoothing capacitor 32. Incidentally, the smoothing capacitor 32 is also provided on the substrate 17 to constitute the power conversion device 1. On the other hand, the lower end sides of the switching elements 18D to 18F on the lower arm side of the inverter circuit 28 are connected to the negative electrode sides of the DC power supply 29 and the smoothing capacitor 32.

And then, the U-phase inverter 19U is connected to the U-phase armature coil of the motor 8 between the switching element 18A on the upper arm side and the switching element 18D on the lower arm side in the U-phase inverter 19. The V-phase inverter 19V is connected to the V-phase armature coil of the motor 8 between the switching element 18B on the upper arm side and the switching element 18E on the lower arm side in the V-phase inverter 19V. The W-phase inverter 19W is connected to the W-phase armature coil of the motor 8 between the switching element 18C on the upper arm side and the switching element 18F on the lower arm side in the W-phase inverter 19W.

Further, a current detector 30 for detecting a DC current flowing through the inverter circuit 28 is connected to a bus line between the DC power supply 29 and the inverter circuit 28. The current detector 30 is connected to the bus line on the minus side in the embodiment, but may be connected to the plus side. Also, the current detector 30 can be constituted of a shunt resistor or a Hall element, but is assumed to consist of the shunt resistor in the embodiment.

(4) Configuration of Control Section 21

Next, the control section 21 is configured of a microcomputer having a processor. The control section 21 receives a rotation speed command value from a vehicle ECU, receives each phase current of a U-phase current iu, a V-phase current iv, and a W-phase current iw from the motor 8, and controls the ON/OFF states of the switching elements 18A to 18F of the inverter circuit 28, based on these. Specifically, the control section 21 controls a gate voltage applied to a gate terminal of each of the switching elements 18A to 18F.

The control section 21 has a phase current converting unit 38, a phase voltage command calculating unit 33, a line modulation calculating unit 34, a PWM signal generating unit 36, a duty correcting unit 39, and a gate driver 37. Then, the phase voltage command calculating unit 33 and the line modulation calculating unit 34 constitute a command value calculating unit 35.

(4-1) Phase Current Converting Unit 38

The phase current converting unit 38 detects each phase current of the U-phase current iu, the V-phase current iv, and the W-phase current iw of the motor 8, based on the DC current detected by the current detector 30, and switching timings of the switching elements 18A to 18F.

For example, in an energization pattern in which within a carrier cycle, the switching element 18A on the upper arm side of the U-phase inverter 19U is turned ON, the switching element 18E on the lower arm side of the V-phase inverter 19V and the switching element 18F on the lower arm side of the W-phase inverter 19W are turned ON, the U-phase current iu flows from the switching element 18A to the U-phase armature coil of the motor 8, the V-phase current iv flows from the flywheel diode 31 connected in parallel to the switching element 18E to the V-phase armature coil of the motor 8, and the W-phase current iw flows out from the W-phase armature coil of the motor 8 to the switching element 18F. In this case, the U-phase current iu flows through the current detector 30 to enable its detection.

On the other hand, in an energization pattern in which within a carrier cycle, the switching element 18A on the upper arm side of the U-phase inverter 19U and the switching element 18B on the upper arm side of the V-phase inverter 19V are turned ON, and the switching element 18F on the lower arm side of the W-phase inverter 19W is turned ON, the U-phase current iu and the V-phase current iv flow from the switching elements 18A and 18B to the U-phase and V-phase armature coils of the motor 8, respectively, and the W-phase current iw flow out from the W-phase armature coil of the motor 8 to the switching element 18F. In this case, the W-phase current iw flows through the current detector 30 to enable its detection.

From the U-phase current iu and W-phase current iw obtained in this way, the remaining V-phase current iv is obtained by applying the Kirchhoff's current law at the neutral point of the armature coil. Incidentally, when the minimum time Y required for detecting the phase current by the current detector 30 exists in the phase current converting unit 38, and the ON period or OFF period of each of the switching elements 18A to 18C on the upper arm side is shorter than the minimum time Y within the carrier cycle, it becomes impossible to detect the phase current. Then, the phase currents iu, iv, and iw detected by the phase current converting unit 38 are input to the phase voltage command calculating unit 33.

(4-2) Phase Voltage Command Calculating Unit 33 (Command Value Calculating Unit 35)

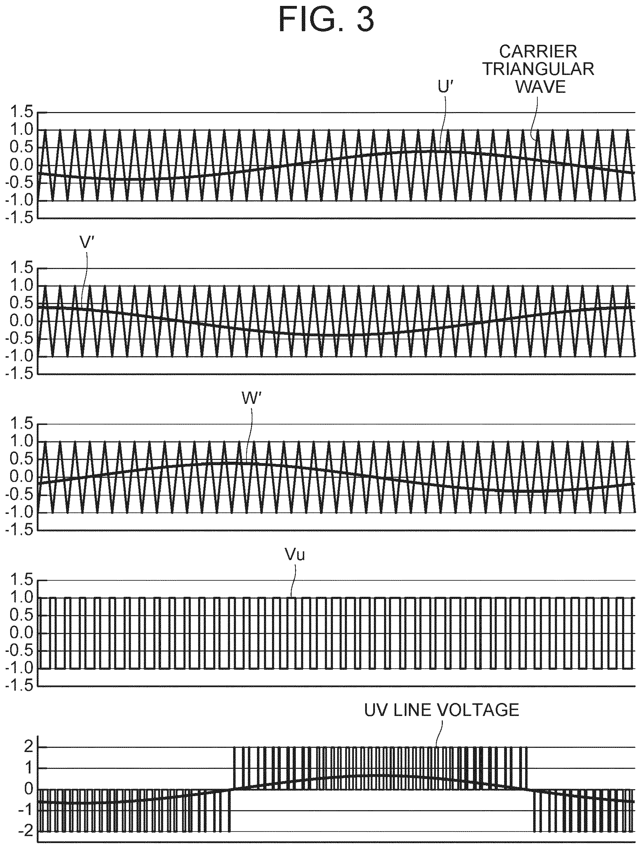

The phase voltage command calculating unit 33 calculates sinusoidal modulation voltage command values U' (U-phase voltage command value), V' (V-phase voltage command value), and W' (W-phase voltage command value) each of which is applied to the armature coil of each phase of the motor 8, based on the electrical angle, current command value and phase currents iu, iv, and iw of the motor 8. The sinusoidal modulation voltage command values U', V', and W' are values after normalization (after correction to -1 to 1) of each voltage command value with the DC voltage Vdc where sinusoidal modulation control of the motor 8 is performed, and are shown in FIG. 3.

Incidentally, there are also shown in FIG. 3, carrier triangular waves to be compared by the PWM signal generating unit 36 to be described later simultaneously. The frequency (carrier frequency) of the carrier triangular wave in the embodiment is set to 20kHz out of an audible range. This is because when the carrier frequency becomes a frequency in the audible range lower than 20 kHz, the sound generated from the electric compressor 16 is recognized as noise. Also, in terms of the carrier frequency, Vu shown in FIG. 3 is a PWM signal (U phase) to be described later where the sinusoidal modulation control of the motor 8 is performed. The UV line voltage in FIG. 3 is a potential difference between the U phase and the V phase to be described later in the case where the sinusoidal modulation control is performed similarly.

(4-3) Line Modulation Calculating Unit 34 (Command Value Calculating Unit 35)

The line modulation calculating unit 34 calculates discontinuous modulation voltage command values U (U-phase voltage command value), V (V-phase voltage command value), and W (W-phase voltage command value) on the basis of the sinusoidal modulation voltage command values U', V', and W' arithmetically operated and calculated by the phase voltage command calculating unit 33. The operation of this line modulation calculating unit 34 will be described in detail later.

(4-4) PWM Signal Generating Unit 36

The PWM signal generating unit 36 generates, based on the discontinuous modulation voltage command values U, V, and W arithmetically operated and calculated by the line modulation calculating unit 34, PWM signals Vu, Vv, and Vw which become drive command signals for the U-phase inverter 19U, the V-phase inverter 19V, and the W-phase inverter 19W of the inverter circuit 28, by comparing their magnitudes with the carrier triangular waves.

(4-5) Duty Correcting Unit 39

The duty correcting unit 39 corrects the discontinuous modulation voltage command values U, V, and W output from the line modulation calculating unit 34 (command value calculating unit 35) to thereby correct the PWM signals Vu, Vv, and Vw output from the PWM signal generating unit 36 and to be output to the gate driver 37. However, the operation of the duty correcting unit 39 will also be described in detail later.

(4-6) Gate Driver 37

The gate driver 37 generates, based on the PWM signals Vu, Vv, and Vw output from the PWM signal generating unit 36, gate voltages Vuu and Vul of the switching elements 18A and 18D of the U-phase inverter 19U, gate voltages Vvu and Vvl of the switching elements 18B and 18E of the V-phase inverter 19V, and gate voltages Vwu and Vwl of the switching elements 18C and 18F of the W-phase inverter 19W. These gate voltages Vuu, Vul, Vvu, Vvl, Vwu, and Vwl can be represented by a duty (ON period of each of the switching elements 18A to 18C on the upper arm side) which is a time ratio of an ON state in a predetermined time.

Then, the respective switching elements 18A to 18F of the inverter circuit 28 are ON/OFF driven based on the gate voltages Vuu, Vul, Vvu, Vvl, Vwu, and Vwl output from the gate driver 37. That is, when the gate voltage is brought into an ON state (predetermined voltage value), the transistor is ON-operated. When the gate voltage is brought into an OFF state (zero), the transistor is OFF-operated. The gate driver 37 is a circuit for applying a gate voltage to the IGBT, based on the PWM signal when each of the switching elements 18A to 18F is the above-described IGBT, and is comprised of a photocoupler, a logic IC, a transistor, or the like.

(4-7) Operation of Line Modulation Calculating Unit 34

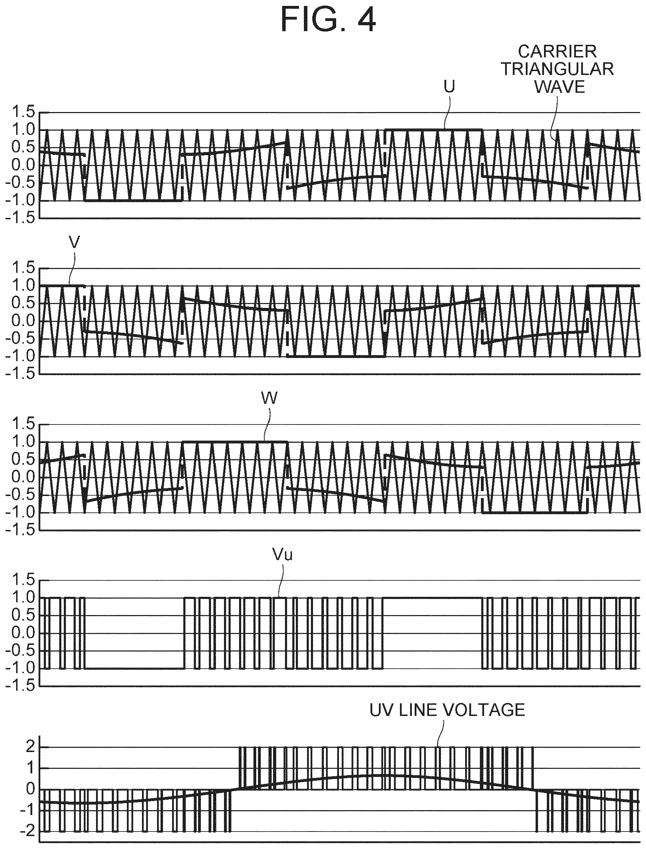

Next, the computation/calculation operation of the discontinuous modulation voltage command values U, V, and W in the line modulation calculating unit 34 constituting the command value calculating unit 35 of the control section 21 will be described with reference to FIG. 4. The discontinuous modulation voltage command values U, V, and W calculated by the line modulation calculating unit 34 are values after normalization of each voltage command value for performing discontinuous modulation control of the motor 8 with the DC voltage Vdc (after correction to -1 to 1). An example is shown in FIG. 4. Incidentally, the carrier triangular waves to be compared by the PWM signal generating unit 36 are also shown in FIG. 4 simultaneously. Further, Vu shown in FIG. 4 is a PWM signal (U phase) for performing the discontinuous modulation control of the motor 8. A UV line voltage in FIG. 4 is a potential difference between the U-

phase and the V phase in the discontinuous modulation control.

The line modulation calculating unit 34 compares the U-phase voltage command value U', V-phase voltage command value V', and W-phase voltage command value W' each being the sinusoidal modulation voltage command value of each phase calculated by the phase voltage command calculating unit 33 to calculate and output the U-phase voltage command value U, V-phase voltage command value V, and W-phase voltage command value W being the discontinuous modulation voltage command values for fixing the ON/OFF states of the switching elements 18A to 18F of each phase maximized in absolute value to the ON or OFF states, thereby performing discontinuous modulation control to reduce the number of switching times of the switching elements 18A to 18F as compared with the case where the sinusoidal modulation control is performed.

Next, specific comparison calculation and fixed phase determination control therefor will be described in detail. First, when comparing the sinusoidal modulation voltage command values U', V', and W' as described above, the line modulation calculating unit 34 of the embodiment puts the respective values as comparison values U' comp, V' comp, and W' comp as in the following equations (i) to (iii):

$$U'\ comp = U'\ ...\ (i)$$

$$V'\ comp = V'\ ...\ (ii)$$

$$W'\ comp = W'\ ...\ (iii)$$

Next, the respective comparison values U' comp, V' comp, and W' comp are compared by the equations (iv) and (v) to calculate the maximum value K1 and the minimum value K2 of them:

$$K1 = max\ (U'\ comp,\ V'\ comp,\ W'\ comp)\ ...\ (iv)$$

$$K2 = min\ (U'\ comp,\ V'\ comp,\ W'\ comp)\ ...\ (v)$$

When the maximum value K1 is greater than or equal to the absolute value of the minimum value K2, that is, when K1≥abs (K2), the maximum value K1 is taken to be K3. When the absolute value of the minimum value K2 is greater than the maximum value K1, that is, when K1<abs (K2), the minimum value K2 is taken to be K3.

Then, when K3 is the comparison value U' comp, that is, when K3 = U' comp, the U-phase voltage command value U' is taken to be K. Further, when K3 is the comparison value V' comp, that is, when K3 = V' comp, the V-phase voltage command value V' is taken to be K. When K3 is the comparison value W' comp, that is, K3 = W' comp, the W-phase voltage command value W' is taken to be K.

After K is determined in this manner, the U-phase voltage command value U, V-phase voltage command value V, and W-phase voltage command value W each being the discontinuous modulation voltage command value are calculated using the following equations (vi) to (viii):

$$U = U'\ -K + sign\ (K)\ ...\ (vi)$$

$$V = V'\ -K + sign\ (K)\ ...\ (vii)$$

$$W = W'\ -K + sign\ (K)\ ...\ (viii)$$

However, sign (K) is assumed to become "1" when K is a positive value, and is assumed to become "-1" when K is a negative value. Further, it can be seen from the respective equations (vi) to (viii) that the line voltage does not change in the sinusoidal modulation control and the discontinuous modulation control.

Accordingly, when the U-phase voltage command value U' is K, the U-phase voltage command value U becomes "1" when the comparison value U' comp is the maximum value K1, and the U-phase voltage command value U becomes "-1" when the comparison value U' comp is the minimum value K2. Thus, during a period in which the U-phase voltage command value U' is K, the ON/OFF states of the switching elements 18A and 18D of the U-phase inverter 19U are fixed, and the number of times of switching is reduced correspondingly.

Also, in the case where the V-phase voltage command value V' is K, the V-phase voltage command value V becomes "1" when the comparison value V' comp is the maximum value K1, and the V-phase voltage command value V becomes "-1" when the comparison value V' comp is the minimum value K2. Thus, during a period in which the V-phase voltage command value V' is K, the ON/OFF states of the switching elements 18B and 18E of the V-phase inverter 19V are fixed, and the number of times of switching is reduced correspondingly.

Further, in the case where the W-phase voltage command value W' is K, the W-phase voltage command value W becomes "1" when the comparison value W' comp is the maximum value K1, and the W-phase voltage command value W becomes "-1" when the comparison value W' comp is the minimum value K2. Thus, during a period in which the W-phase voltage command value W' is K, the ON/OFF states of the switching elements 18C and 18F of the W-phase inverter 19W are fixed, and the number of times of switching is reduced correspondingly.

FIG. 4 shows the U-phase voltage command value U, V-phase voltage command value V, and W-phase voltage command value W output from the line modulation calculating unit 34, the U-phase PWM signal Vu output from the PWM signal generating unit 36, and the UV line voltage. In this figure, during a period in which the U-phase voltage command value U becomes "1" or "-1", the ON/OFF states of the switching elements 18A and 18D of the U-phase inverter 19U are fixed. During a period in which the V-phase voltage command value V is "1" or "-1", the ON/OFF states of the switching elements 18B and 18E of the V-phase inverter 19V are fixed, and the ON/OFF states of the switching elements 18C and 18F of the W-phase inverter 19W are fixed.

Thus, when the total number of switchings per period of the switching elements 18A to 18F of each phase in the sinusoidal modulation control is defined as 6/6 (U phase) + 6/6 (V phase) + 6/6 (W phase) = 18/6, the number of switching times of the switching elements 18A to 18F of each phase is reduced to 2/3 in any case and becomes 4/6 (U phase) + 4/6 (V phase) + 4/6 (W phase) = 12/6 in the discontinuous modulation control as shown in FIG. 4. Therefore, according to the discontinuous modulation control, a switching loss generated in each of the switching elements 18A to 18F and heat generation due to it are suppressed as compared with the sinusoidal modulation control.

(4-8) Operation of Duty Correcting Unit 39

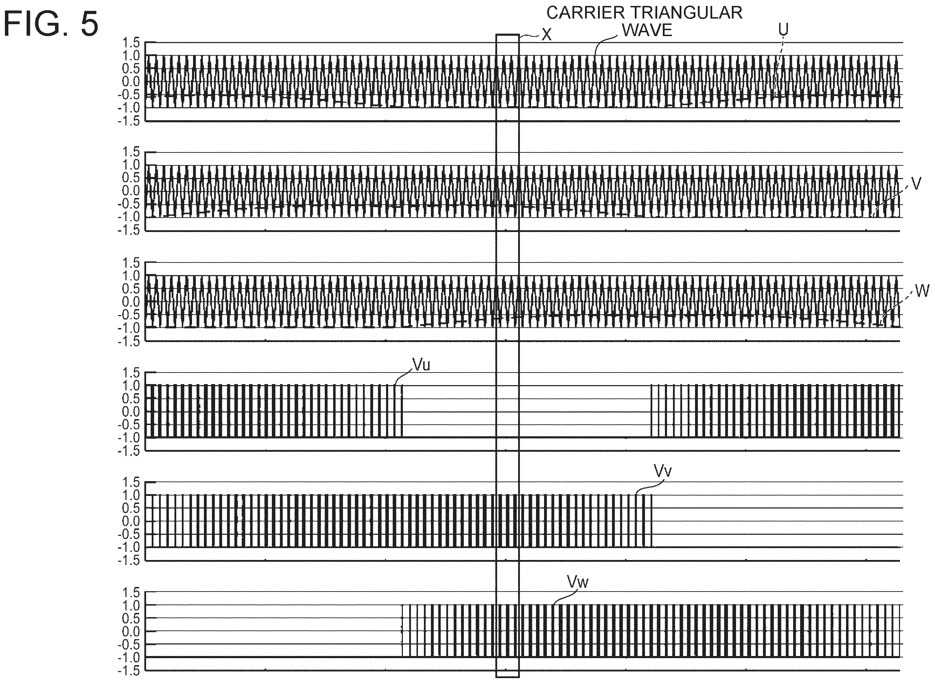

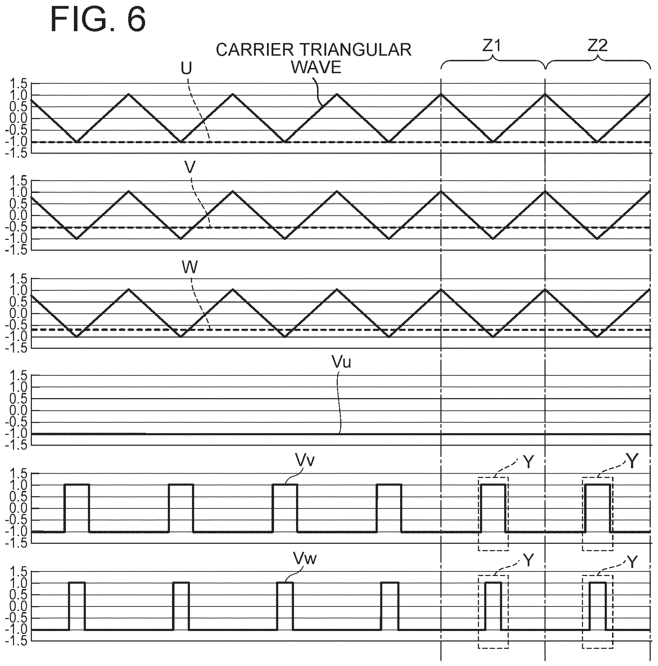

Next, the correcting operation of each PWM signal by the duty correcting unit 39 within the carrier cycle will be described in detail with reference to FIGS. 5 to 8. FIG. 5 shows the discontinuous modulation voltage command values U, V, and W and the carrier triangular waves output by the line modulation calculating unit 34, and the PWM signals Vu, Vv, and Vw output by the PWM signal generating unit 36. FIG. 6 shows an enlarged view of the vicinity of a frame X in FIG. 5.

The example shown in each of FIGS. 5 to 8 indicates the discontinuous modulation control in which the switching element on the upper arm side of any one phase is fixed to the OFF state, and the switching element on the lower arm side thereof is fixed to the ON state.

As described above, the PWM signal Vu is a drive command signal for the U-phase inverter 19U of the inverter circuit 28, and the width of the pulse of "1" shown in FIGS. 5 and 6 is the duty within one carrier cycle, and becomes the ON period of the switching element 18A on the upper arm side. That is, during this duty (the width of the pulse of "1"), the switching element 18A on the upper arm side is turned ON, and the switching element 18D on the lower arm side is turned OFF.

Further, the PWM signal Vv is a drive command signal of the V-phase inverter 19V. Similarly, the width of the pulse of "1" shown in FIGS. 5 and 6 is the duty within one carrier cycle, and becomes the ON period of the switching element 18B on the upper arm side. That is, during this duty (the width of the pulse of "1"), the switching element 18B on the upper arm side is turned ON, and the switching element 18E on the lower arm side is turned OFF.

In addition, the PWM signal Vw is a drive command signal of the W-phase inverter 19W. Similarly, the width of the pulse of "1" shown in FIGS. 5 and 6 is the duty within one carrier cycle, and becomes the ON period of the switching element 18C on the upper arm side. That is, during this duty (the width of the pulse of "1"), the switching element 18C on the upper arm side is turned ON, and the switching element 18F on the lower arm side is turned OFF.

In such a power conversion device 1, when a voltage utilization rate kH of the motor 8 decreases, for example, in a region near the frame X in FIG. 5, as shown in FIG. 6, the switching element 18A on the upper arm side of the U phase is fixed to the OFF state, the switching element 18D on the lower arm side is fixed to the ON state ("-1"), and the ON period ("1") of the switching element 18B on the upper arm side of the V phase and the ON period ("1") of the switching element 18C on the upper arm side of the W phase become extremely short. Here, the voltage utilization rate kH can be expressed by the following equation (ix) when expressed by the U-phase voltage command value U', the V-phase voltage command value V', and the W-phase voltage command value W', which are the three-phase voltage command values of each phase:

$$kH = \sqrt{(U'^2 + V'^2 + W'^2)} \quad ... \quad (ix)$$

On the other hand, as described above, since the minimum time Y required for detecting the phase current by the current detector 30 exists in the phase current converting unit 38, the switching element 18A on the upper arm side of the U phase is fixed to the OFF state. Then, when the phase current is detected during the ON periods of the switching elements 18B and 18C on the upper arm side of the V phase and the W phase, it becomes impossible to detect the phase currents of the V and W phases where the ON periods of the switching elements 18B and 18C on the upper arm side within one carrier cycle are shorter than this minimum time Y as shown in FIG. 6. That is, although the U-phase current iu can be detected, the V-phase current iv and the W-phase current iw cannot be detected. It is therefore not possible to detect the phase currents iu, iv, and iw corresponding to the three phases.

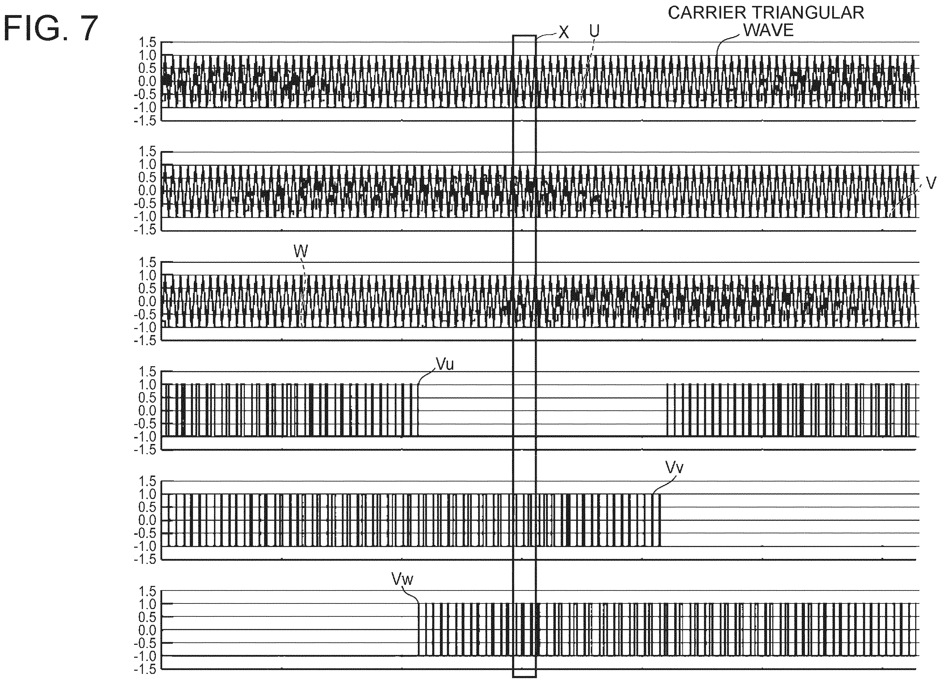

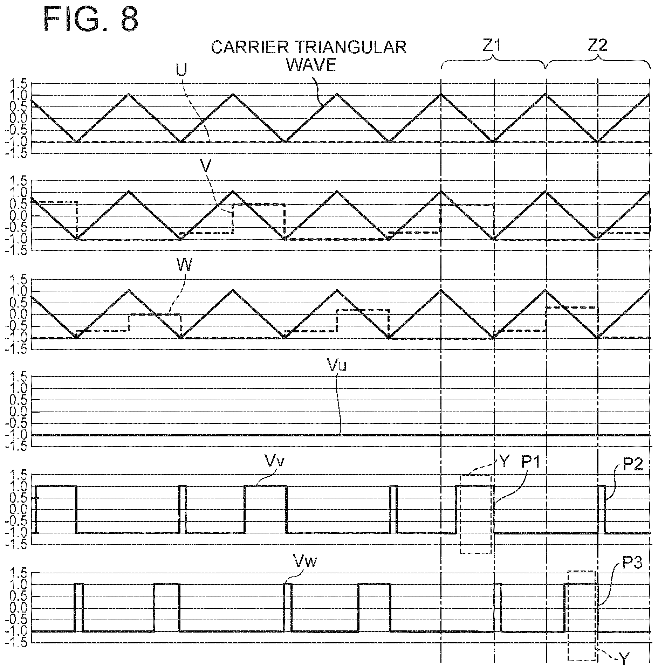

Therefore, in the embodiment, when the voltage utilization rate kH of the motor 8 drops to a predetermined voltage utilization rate kH1 or less, as shown in FIGS. 7 and 8, the duty correcting unit 39 of the control section 21 corrects the discontinuous modulation voltage command values U, V, and W output from the line modulation calculating unit 34 (the command value calculating unit 35) and corrects the PWM signals Vu, Vv, and Vw output from the PWM signal generating unit 36.

That is, a part of the ON period of the switching element 18B in the other V-phase carrier cycle Z2 is moved and added to the ON period of the switching element 18B on the upper arm side of the V phase in a V-phase specific carrier cycle Z1 shown in each of FIGS. 6 and 8 to correct the ON period (indicated by P1 in FIG. 8) of the switching element 18B in the V-phase specific carrier cycle Z1 to be greater than or equal to the above-mentioned minimum time Y. On the other hand, the ON period (indicated by P2 in FIG. 8) of the switching element 18B in the V-phase carrier cycle Z2 is set to the minimum value that can be output.

In this case, the duty correcting unit 39 causes the sum of the duties of the switching elements 18B in the post-correction two carrier cycles (Z1 to Z2) shown in FIG. 8 to match with the sum of the duties of the switching element 18B in the two carrier cycles (Z1 to Z2) before the correction in FIG. 6. Further, the duty correcting unit 39 provides the ON period of the switching element 18B in the first half of the specific carrier cycle Z1 of the V phase, and provides the ON period of the switching element 18B in the latter half of the other carrier cycle Z2 of the V phase.

Further, even regarding the W phase, the duty correcting unit 39 moves and adds a part of the ON period of the switching element 18C in the other W-phase carrier cycle (next carrier cycle of Z2) to the ON period of the switching element 18C on the upper arm side of the W phase in a W-phase specific carrier cycle Z2 to correct the ON period (indicated by P3 in FIG. 8) of the switching element 18C in the specific carrier cycle Z2 of the W phase to be greater than or equal to the above-mentioned minimum time Y. On the other hand, the ON period of the switching element 18C in the other carrier cycle of the W phase is set to the minimum value that can be output in the same manner.

Similarly, in this case as well, the duty correcting unit 39 causes the sum of the duties of the switching element 18C in the post-correction two carrier cycles (Z2 and the next cycle) shown in FIG. 8 to match with the sum of the duties of the switching element 18C in the two carrier cycles (Z2 and the next cycle) before the correction in FIG. 6. Further, the duty correcting unit 39 provides the ON period of the switching element 18C in the first half of the specific carrier cycle Z2 of the W phase, and provides the ON period of the switching element 18C in the latter half of the other carrier cycle (the cycle next to Z2) of the W phase.

Then, as shown in FIG. 8, the above correction is similarly executed even with respect to other timings (a set of a specific carrier cycle and other carrier cycle). Incidentally, the other carrier cycle is not limited to one, and a part of each of those ON periods may be moved from two or more (plural) carrier cycles following the specific carrier cycle to the ON period of the specific carrier cycle.

Consequently, the phase current converting unit 38 can detect the V-phase current iv in the carrier cycle Z1 and the W-phase current iw in the carrier cycle Z2 by the current detector 30, and finally can detect the phase currents iu, iv, and iw corresponding to the three phases. In this case, for example, since the ON period of the switching element 18B and the ON period of the switching element 18C in the carrier cycle Z2 do not overlap, the V-phase current iv and the W-phase current iw can be detected without any trouble.

Further, as is clear from FIG. 8, since the switching element 18C is also switched in the carrier cycle Z1 and the switching element 18B is also switched in the carrier cycle Z2, the carrier cycle does not change.

As described in detail above, in the present invention, the duty correcting unit 39 of the control section 21 moves and adds the part of the ON period of the switching element (18B in the V phase) in the other carrier cycle (Z2 in the V phase) to the ON period of the switching element (18B in the V phase) of the inverter circuit 28 in the specific carrier cycle (Z1 in the V phase) to thereby correct the ON period of the switching element (18B in the V phase) in the specific carrier cycle (Z1 in the V phase) to be greater than or equal to the minimum time Y required for detecting the current by the current detector 30. Therefore, for example, in the power conversion device 1 of the discontinuous modulation method as in the embodiment, even when as in the embodiment, the voltage utilization rate kH of the motor 8 becomes low and thereby as in the embodiment, the OFF state of the switching element 18A on the upper arm side of the U phase in the inverter circuit 28 is fixed, and the ON periods of the switching elements 18B and 18C on the upper arm side of the other two phases become shorter than the minimum time Y within one carrier cycle, it is possible to secure the ON period greater than or equal to the minimum time Y for detecting the current by the current detector 30 in the specific carrier cycle (Z1 in the V phase) and detect the phase current (iv in the V-phase carrier cycle Z1).

In particular, since the duty correcting unit 39 adds the part of the ON period of the switching element (18B in the V phase) in the other carrier cycle (Z2 in the V phase) to the ON period of the switching element (18B) in the specific carrier cycle (Z1 in the V phase), the generation of noise due to a decrease in the carrier frequency can also be prevented.

Further, in the embodiment, the duty correcting unit 39 makes the sums of the duties in the specific carrier cycle (Z1 in the V phase) and in the other carrier cycle (Z2 in the V phase) match before and after the correction. It is therefore possible to achieve high-quality motor control without causing deterioration of the controllability of the motor 8 as well.

In this case, in the embodiment, the duty correcting unit 39 corrects the corrected ON period of the switching element (18B in the V phase) in the other carrier cycle (Z2 in the V phase) to be the minimum value that can be output. Therefore, even if the motor 8 is rotated at a low speed, it is possible to secure the ON period of the minimum time Y or more for current detection by the current detector 30 in the specific carrier cycle (Z1 in the V phase) without any problem.

Further, in the embodiment, the duty correcting unit 39 provides the corrected ON period of the switching element (18B in the V phase) in the first half of the specific carrier cycle (Z1 in the V phase), and provides the corrected ON period of the switching element (18B in the V phase) in the latter half of the other carrier cycle (Z2 in the V phase). Therefore, the phase of the ON period does not overlap with other phases, and the phase currents iv and iw can be easily detected in the specific carrier cycles (Z1 in the V phase and Z2 in the W phase).

Incidentally, in the above-described embodiment, the part of the ON period of the switching element in the other carrier cycle is moved and added to the ON period of the switching element of the inverter circuit 28 in the specific carrier cycle. However, when the switching element of one phase is fixed to the ON state, and the switching elements of other two phases are switched, the part of the OFF period of the switching element in the other carrier cycle is moved and added to the OFF period of the switching element in the specific carrier cycle. Thus, by moving and adding the part thereto, the OFF period of the switching element in the specific carrier cycle may be corrected to be equal to or longer than the minimum time Y required for detecting the current by the current detector 30.

Also, in the embodiment, the present invention has been described by the discontinuous modulation type power conversion device 1 in which the switching element of one phase is fixed to the OFF state, and the switching elements of other two phases are switched, but the present invention is not limited thereto. The present invention is also effective in a method of fixing the switching element of one phase to the ON state and the OFF state.

Further, in the inventions other than claims 7 and 8, not only the discontinuous modulation type power conversion device 1 of the embodiment but also the sinusoidal modulation type power conversion device 1 is effective. In that case, the duty correcting unit corrects the sinusoidal modulation voltage command values U', V', and W' output by the phase voltage command calculating unit 33 in the same manner as described above.

Furthermore, in the embodiment, the present invention is applied to the power conversion device 1 which drives and controls the motor 8 of the electric compressor 16, but the present invention is not limited thereto. The present invention is effective for the drive control of the motors of various devices.

Description of Reference Numerals

1 power conversion device
8 motor
16 electric compressor
18A to 18F switching element
19U U-phase inverter
19V V-phase inverter
19W W-phase inverter
21 control section
28 three-phase inverter circuit
30 current detector
33 phase voltage command calculating unit
34 line modulation calculating unit
35 command value calculating unit
36 PWM signal generating unit
37 gate driver

38 phase current converting unit
39 duty correcting unit.

**Claims**

1. A power conversion device comprising:

an inverter circuit which drives a motor;
a current detector which detects a DC current flowing through the inverter circuit;
a command value calculating unit which calculates a voltage command value to be applied to the motor, based on the current value detected by the current detector;
a PWM signal generating unit which generates a PWM signal to PWM-control the inverter circuit, based on the voltage command value calculated by the command value calculating unit, and
a duty correcting unit which corrects a duty of the PWM signal generated by the PWM signal generating unit, wherein the duty correcting unit moves and adds a part of an ON period of one of switching elements of the inverter circuit in the other carrier cycle to an ON period of the switching element in a specific carrier cycle or moves and adds a part of an OFF period of the switching element in the other carrier cycle to an OFF period of the switching element in the specific carrier cycle to correct the ON period or OFF period of the switching element in the specific carrier cycle to be greater than or equal to a minimum time required for detecting the current by the current detector.

2. The power conversion device according to claim 1, wherein the duty correcting unit causes the sums of duties in the specific carrier cycle and the other carrier cycle to match with each other before and after the correction.

3. The power conversion device according to claim 1 or 2, wherein the duty correcting unit corrects the corrected ON period or OFF period of the switching element in the other carrier cycle to be an outputtable minimum value.

4. The power conversion device according to any of claims 1 to 3, wherein the duty correcting unit provides the corrected ON period or OFF period of the switching element in the first half of the specific carrier cycle.

5. The power conversion device according to claim 4, wherein the duty correcting unit provides the corrected ON period or OFF period of the switching element in the latter half of the other carrier cycle.

6. The power conversion device according to any of claims 1 to 5, wherein when a voltage utilization rate of the motor which is a square average of normalized voltage command values drops to a predetermined voltage utilization rate or less, the duty correcting unit corrects the ON period or OFF period of the switching element in the specific carrier cycle and the other carrier cycle.

7. The power conversion device according to any of claims 1 to 6, wherein the command value calculating unit includes:

a phase voltage command calculating unit which calculates sinusoidal modulation voltage command values to be applied to the motor, and
a line modulation calculating unit which, based on the sinusoidal modulation voltage command values, calculates discontinuous modulation voltage command values for fixing an ON/OFF state of the switching element of a predetermined one phase in the inverter circuit and modulating ON/OFF states of the switching elements of other two phases,
wherein the PWM signal generating unit generates PWM signals to PWM-control the inverter circuit, based on the discontinuous modulation voltage command values calculated by the line modulation calculating unit.

8. The power conversion device according to claim 7, wherein when an OFF state of the switching element on the upper arm side of the one phase in the inverter circuit is fixed, and an ON period of each of the switching elements on the upper arm side of other two phases is shorter than the minimum time within one carrier cycle, or when an ON state of the switching element on the upper arm side of the one phase is fixed, and an OFF period of each of the switching elements on the upper arm side of other two phases is shorter than the minimum time within one carrier cycle, the duty correcting unit corrects the ON period or OFF period of the switching element in the specific carrier cycle and the other carrier cycle.

# FIG. 1

# FIG. 2

# FIG. 3

# FIG. 4

# FIG. 5

CARRIER TRIANGULAR WAVE

FIG. 6

FIG. 7

CARRIER TRIANGULAR WAVE

EP 3 979 485 A1

FIG. 8

**EP 3 979 485 A1**

## INTERNATIONAL SEARCH REPORT

| International application No. |
|---|
| PCT/JP2020/021041 |

**A. CLASSIFICATION OF SUBJECT MATTER**
H02M 7/48(2007.01)i
FI: H02M7/48 F

According to International Patent Classification (IPC) or to both national classification and IPC

**B. FIELDS SEARCHED**

Minimum documentation searched (classification system followed by classification symbols)
H02M7/48

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-113494 A (MITSUBISHI ELECTRIC CORP.) 15.05.2008 (2008-05-15) entire text, all drawings | 1-8 |
| A | JP 2010-213407 A (HITACHI INDUSTRIAL EQUIPMENT SYSTEMS CO., LTD.) 24.09.2010 (2010-09-24) entire text, all drawings | 1-8 |
| A | JP 2012-125022 A (DENSO CORP.) 28.06.2012 (2012-06-28) entire text, all drawings | 1-8 |

| ☐ Further documents are listed in the continuation of Box C. | ☒ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 August 2020 (20.08.2020) | 01 September 2020 (01.09.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

Information on patent family members

| International application No. |
| --- |
| PCT/JP2020/021041 |

| Patent Documents referred in the Report | Publication Date | Patent Family | Publication Date |
| --- | --- | --- | --- |
| JP 2008-113494 A | 15 May 2008 | (Family: none) | |
| JP 2010-213407 A | 24 Sep. 2010 | US 2011/0292700 A1 entire text, all drawings WO 2010/103733 A1 EP 2408100 A1 CN 102326328 A | |
| JP 2012-125022 A | 28 Jun. 2012 | US 2012/0139461 A1 entire text, all drawings CN 102570890 A | |

Form PCT/ISA/210 (patent family annex) (January 2015)

**EP 3 979 485 A1**

**REFERENCES CITED IN THE DESCRIPTION**

**Patent documents cited in the description**

- JP 4788416 B

- JP HEI81996340691 A